Europäisches Patentamt

European Patent Office

Office européen des brevets

(19)

(11) Publication number: **0 193 000
B1**

# EUROPEAN PATENT SPECIFICATION

(45) Date of publication of the patent specification:
**24.05.89**

(51) Int. Cl.⁴: **B04B 9/06, B04B 5/10**

(21) Application number: **86101359.7**

(22) Date of filing: **03.02.86**

(54) Disposable cartridges for centrifugal separators.

(30) Priority: **27.02.85  GB 8504880**

(43) Date of publication of application:
**03.09.86 Bulletin 86/36**

(45) Publication of the grant of the patent:
**24.05.89 Bulletin 89/21**

(84) Designated Contracting States:
**DE FR GB IT NL SE**

(56) References cited:
**FR-A- 1 063 362
FR-A- 1 118 691
GB-A- 1 035 542
GB-A- 2 049 494
US-A- 4 106 689
US-A- 4 346 009**

(73) Proprietor: **AE PLC, Cawston House Cawston, Rugby Warwickshire CV22 7SB(GB)**

(72) Inventor: **Purvey, Ronald James, 1 Fosseway Close, Axminster Devon EX13 5LW(GB)**

(74) Representative: **Hadfield, Robert Franklin et al, T&N plc Group Patent Department Bowden House Ashburton Road West Trafford Park, Manchester M17 1RA(GB)**

ACTORUM AG

## Description

This invention relates to disposable cartridges for centrifugal separators, particularly centrifugal separators for use as fuel or lubricating oil cleaners for engines and transmission units such as internal combustion engines and gearboxes.

Centrifugal separator cartridges of the oil cleaner type are normally rotatably mounted on a vertical or near vertical shaft through which oil is introduced into the rotor and driven by the reaction force arising when oil under pressure leaves through tangentialy directed nozzles or jets usually situated at the bottom of the cartridge. We have found that the abililty of the nozzles to rotate the cartridge at high speed is impaired, and thus the cleaning ability of the separator is also impaired, if the oil flow through the nozzles becomes turbulent and this effectively limits the use of higher pressures within the cartridge to achieve higher speeds and therefore more efficient separation. Heretofore it has been usual to provide the nozzle opening in a side of a hollow rounded projection which extends downwards from the base of the cartridge and which is open to the interior of the cartridge at its upper end and closed at its lower end. The projection usually takes the form of a separate piece which is, for example, flanged at its upper end so that the projecting piece can be passed through a hole in the base of the cartridge until the flange rests on the periphery of the hole and can be secured in position, e.g. by soldering brazing or welding. Such nozzle projections are shown in GB-A 2 049 494. Because of the configuration and construction of such known cartridges the oil flow through and in the cartridge nozzle-piece is generally very turbulent thus limiting the rotational speed of the cartridge which may be achieved at any given oil pressure. The effect of turbulence is to limit the maximum rotational speed which the cartridge might otherwise have achieved.

FR-A 1 118 691 shows a nozzle-piece formation inherently better with regard to turbulence than the nozzles referred to above. The importance of turbulence is clearly not recognised, however, since holding bolts are sited in the path of the oilflow to the nozzles.

It is an object of the present invention to provide a base for a disposable cartridge wherein the nozzles are formed integrally by pressing and which promote less turbulent oil flow maintained at higher oil-pressures than heretofore. It is also an object of the present invention to provide a cartridge which for a given oil pressure will rotate at higher revolutions per minute than known cartridges and will thus provide more efficient cleaning of the oil or fuel by removing smaller contaminant particle sizes for any given oil pressure.

A cartridge for a centrifugal oil separator must be able to withstand transient pressures of up to 20 bar during cold start-up conditions. The cartridge must, therefore, be able to withstand such pressures without permanent distortion.

Known cartridges are manufactured from a mixture of expensive machined castings and sheet metal pressings allowing the cartridge to be very rigid by using relatively thick metal sections. This is economic for a user where the cartridge may be disassembled, cleaned and re-used but for a disposable cartridge, however, such constructions are prohibitively expensive.

It is a further object of the present invention to provide a disposable cartridge of lightweight construction, possessing adequate inherent balance, the ability to withstand rotational forces of up to 4,000g without distortion sufficient to slow the cartridge significantly, be economic to manufacture and for a user to purchase and be fabricated wholly, except for the bearings, from thin sheet metal components as distinct from employing cast components.

It has been found with known cartridge bases fabricated from sheet metal and having separate nozzle pieces that in addition to the disavantages arising from turbulent oil flow they are also insufficiently rigid. This is manifested in that at high oil pressures the base tends to distort and may cause the bearing which is usually incorporated into the base to jam on the shaft about which the cartridge is rotating and also stop the cartridge. When the oil pressure falls the base may again assume its previous shape and begin to rotate again. This, however, may not occur as permanent deformation can be caused and the cartridge will remain jammed on its shaft. This is quite evidently intolerable as the cartridge stopping negates the whole object of using a centrifugal separator. It has been found that the same cartridge base which promotes less turbulent oil flow also because of its configuration is sufficiently rigid to overcome the latter additional disadvantage of known cartridges described above. The effect of the distortion of known cartridges is often likened to a child's "frog-clicker" toy where a piece of curved, dished sheet metal is bent over-centre and then released to produce a clicking noise.

According to the present invention there is provided a disposable cartridge for a centrifugal separator for cleaning fuel or lubricating oil; the cartrige comprising a cover member and inner flow directing and debris-retaining member, a base member in the form of a sheet metal pressing having two nozzles therein and through which oil leaves the cartridge so as to produce a reaction force to spin the cartridge, two bearings, one each associated with the cover member and the base member, the at least two nozzles lying in recesses in the base member, the recesses being in the form of smoothly-contoured circumferential troughs, being of deepening section starting with minimum depth at the beginning of the trough remote from the nozzle and finishing with maximum depth near to the nozzle, characterised in that the recesses extend through approximately 180°.

Preferably the nozzles are punched in the base member by a piercing operation from the inside of the trough during a stage of the forming operation. It is important that no 'rag edges' or burrs are left on the inside of the nozzle as this may increase turbulence and thus impair the performance of the cartridge. Alternatively drilled nozzles may be employed but again these are preferably drilled from the inside so that any burrs are on the outside of the nozzle.

The cover member, inner flow directing and debris-retaining member and base member may all be produced from thin sheet metal pressings.

In a preferred embodiment of the present invention a disposable cartridge for a centrifugal separator further comprises a tubular tension member disposed axially between the top cover and the base member. In such a preferred embodiment the bearings may be press-fitted into the tubular tension member thus conferring the advantage of holding the bearings in axial alignment within a single member and better able to resist forces tending to cause distortion.

Preferably, the nozzles are formed such that the direction of the issuing oil jet is directed at an angle downwardly away from the rotatable cartridge to prevent oil splash-back from the housing in which the cartridge rotates from reaching and thus slowing the cartridge.

In order that the invention may be more fully understood examples will now be described by way of illustration only with reference to the accompanying drawings of which:

Figures 1(a) and 1(b) show a plan and elevation (partly sectioned) view of a pressed sheet metal base member of a disposable cartridge according to the present invention;

Figures 2(a) to 2(f) are sections where indicated through the base member shown in Figure 1(a);

Figures 3(a) to 3(c) show perspective views in elevation and plan from above and below of the base member at an intermediate stage in its formation and showing particularly the circumferential troughs;

Figure 4 shows a section in elevation through an embodiment of a disposable cartridge according to the present invention;

Figure 5 shows a section in elevation through a first alternative embodiment of a disposable cartridge according to the present invention;

Figure 6 shows the disposable cartridge of Figure 5 installed in a centrifugal separator housing.

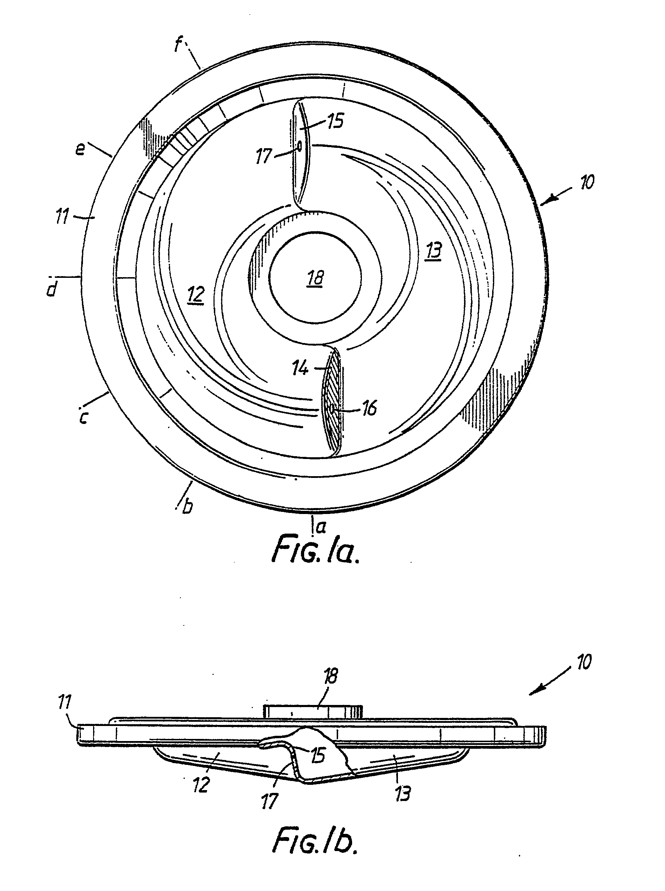

In the following descriptions similar features in the drawings are denoted by common reference numerals. Referring now to Figures 1(a) and 1(b), 2(a) to 2(f), 3(a) to 3(c), 4 and 5.

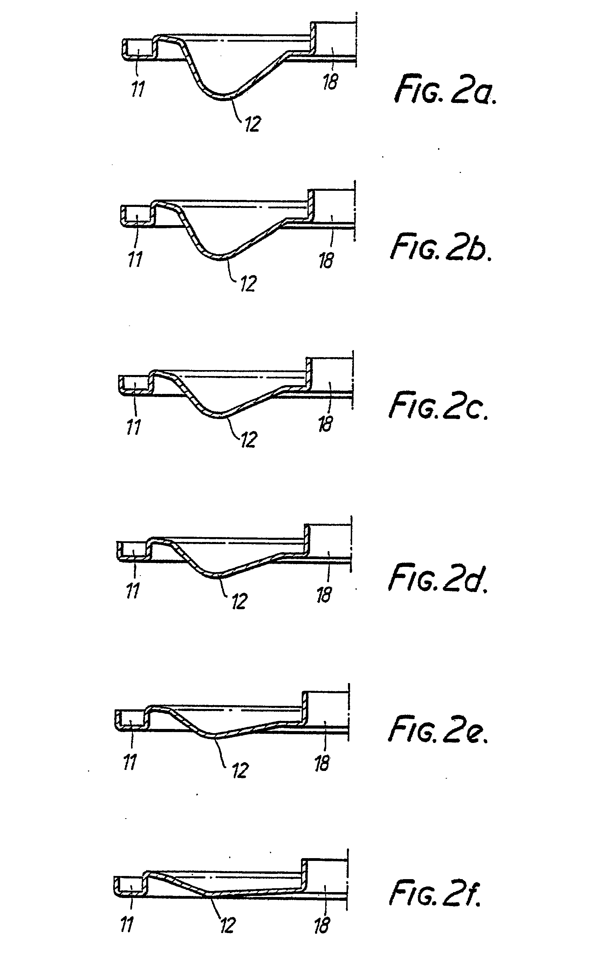

The base member is shown generally at 10. The base member 10 comprises a peripheral channel section 11 and two generally semi-circular trough sections 12 and 13. When viewing Figure 1(a) the trough section 12 begins at its shallowest region around section 'f' (see Figure 2f) in a very shallow depression and gradually increases in depth up to around section 'a' (see Figure 2a) where the trough ends at its deepest point in wall 14 which is also at a small downwardly sloping angle of approximately 10° to a plane parallel to the base axis. Trough section 13 is also similarly formed in the reverse direction terminating in wall 15. The walls 14 and 15 have nozzles 16 and 17 pierced in them from the inside respectively. The nozzles 16 and 17 are pierced normal to the plane of the walls 14 and 15 and thus are downwardly directed at an approximate angle of 10° to a plane normal to the axis of the base 10. The diameter of the nozzle may be optimised to suit the oil type, viscosity and oil temperature of the intended application but may typically be of the order of 1.5mm. In the centre of the base member 10 is a flanged hole 18 defining a location for a bearing 26 either directly or in a tubular tension member 40. The gradually deepening troughs 12 and 13 possess diametral symmetry. The base member is pressed in a series of pressing steps from a single piece of 0.91mm thick mild steel, the nozzles 16 and 17 being pierced from the inside. The channel 11 is for joining the base member 10 to a domed cover member 20 with a rolled seam 25.

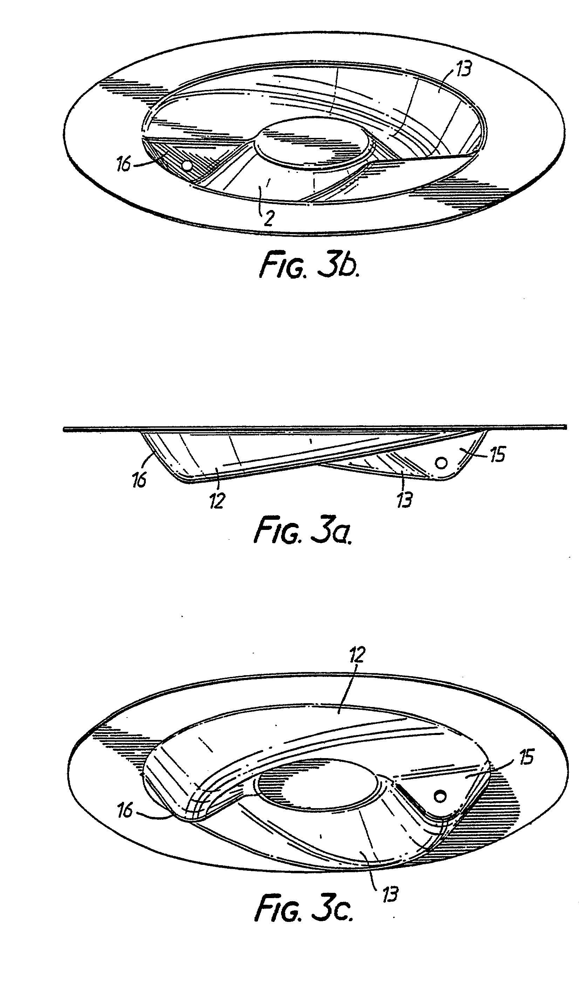

Figure 3(a) shows a side elevation of the base member 10 at a stage where the troughs 12 and 13 have been pressed but the nozzles 16 and 17 the channel 11 and the central hole 18 have yet to be formed. Figure 3(b) is a perspective view of the inside of the base member 10 and Figure 3(c) a perspective view of the outside of the base member 10.

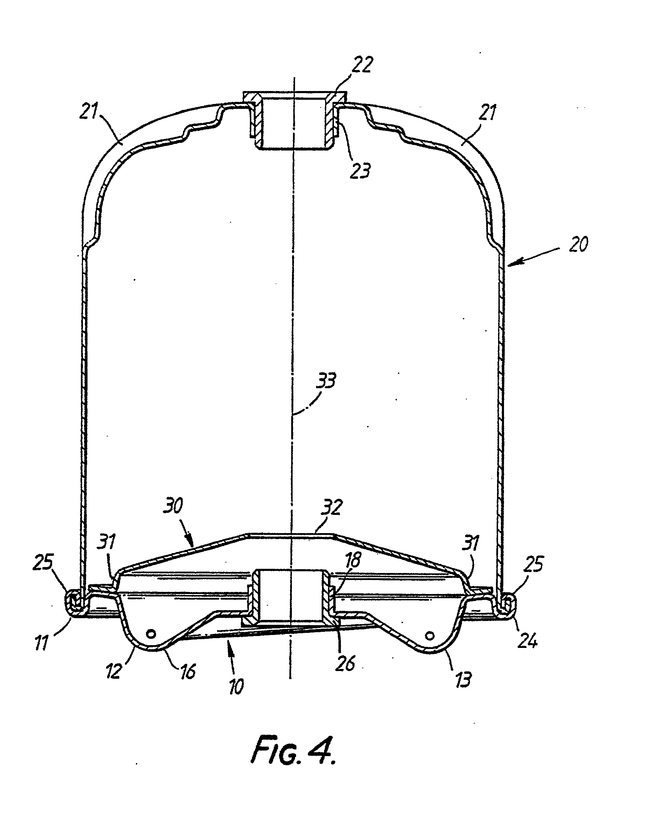

A complete cartridge is shown in Figure 4 where the disposable cartridge comprises a domed top cover 20 having at its upper end pressed-in reinforcing depressions 21 disposed radially, and a flanged bearing 22 press-fitted into a flanged hole 23. The lower periphery 24 of the domed cover 20 rests in the channel 11 of the base member 10 and a rolled seam 25 is formed to produce a substantially leak-free joint between the cover 20 and the base 10. In the base member 10 is a flanged bearing 26 press-fitted into the flanged hole 18. Within the cartridge is a dished flow directing and debris-retaining member 30 having an annular peripheral flanged portion 31 spot welded to the base member 10. In the centre of the member 30 is a hole 32 being symmetrical about the cartridge axis 33.

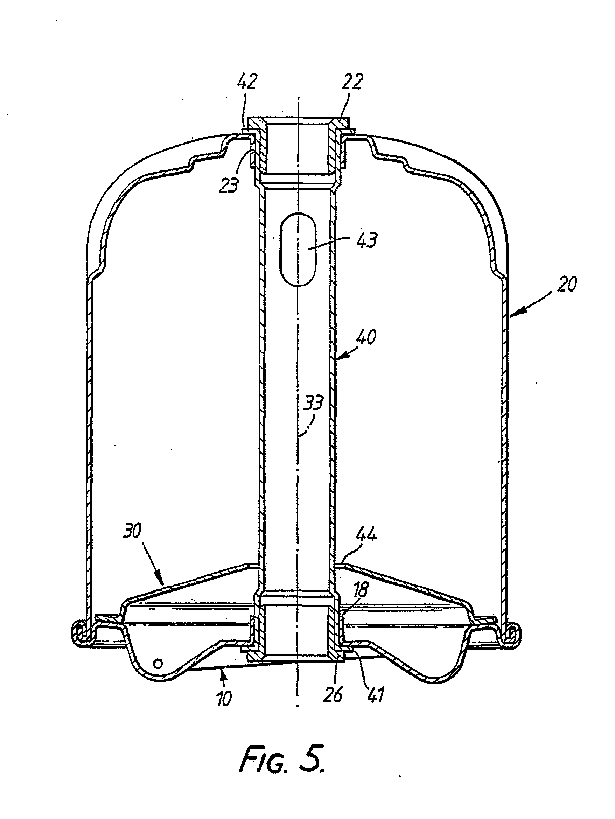

In the alternative embodiment shown in Figure 5 a tubular tension member 40 is disposed between the top cover 20 and the base member 10. The tubular member 40 has an outwardly turned flange 41 at its lower end such that the flange 41 is outside and supportive of the base member 10 and a second outwardly turned flange 42 at its upper end again outside and supportive of the top cover 20. The tubular tension member 40 is a press-fit in the two flanged holes 23 and 18 in the top cover 20 and base member 10 respectively. In the upper portion of the member 40 are oil entry holes 43. The bearings 22 and 26 are press-fitted directly into the tubular member 40 which is coaxial with the cartridge axis 33. An annular opening 44 is defined by the member 30 and the tension member 40. The tubular member 40 serves to both resist tensile stresses resulting from high oil pressures which tends to expand the cartridge both radially and axially. Furthermore the tubular member also provides a repeatable datum in which to insert the bearings 22 and 26 and to maintain axial alignment even at high oil pressures.

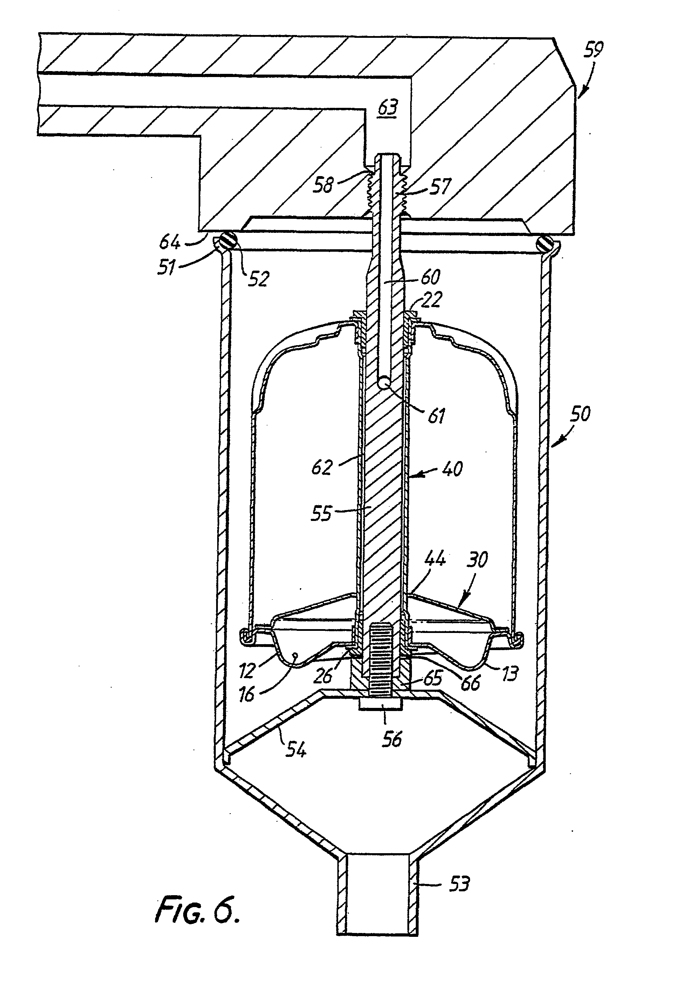

Figure 6 shows the cartridge of Figure 5 in a centrifugal separator housing. The housing comprises a body member 50. At the body 50 upper end there is a rebated lip 51 to receive and locate a rubber sealing ring 52. At the body 50 lower end there is a tapered portion 53. Within the body 50 a cruciform sheet metal structure 54 is spot-welded to the body 50 and supports a vertical shaft 55 by a bolt 56. Located between shaft 55 and bolt 56 is a bush 65, the upper face 66 of which provides a thrust surface. The shaft 55 has at its upper end a male threaded portion 57 which co-operates with a female threaded portion 58 in, for example, a support housing 59 on an engine cylinder block (not shown). Part of the upper end of the shaft 55 is drilled axially with a conduit 60 which also comprises a cross drilling 61 opening out into the tubular member 40 of the cartridge. The shaft 55 and tubular member 40 define a cylindrical annulus 62. Oil is supplied to the conduit 60 via a passage 63 formed in the housing 59. The body 50 and cartridge are secured to the housing 59 by screwing the complete body 50 on to the housing 59 by the co-operating threads 57 and 58 the sealing ring 52 being compressed into the rebated lip 51 and sealing against the face 64 of the housing 59.

In steady state operation oil under a pressure of about 5 bar flows through the passage 63, into the conduit 60 and out of the cross drilling 61. The annulus 62 fills with oil and then flows through the oil entry holes 43 into the chamber of the cartridge formed between the base 10, the top cover 20 and the tubular member 40. When the chamber so defined is full oil is ejected under pressure from the nozzles 15 and 16 thus causing the cartridge to rotate by a reaction force, the cartridge being supported on the shaft 55 by the bearings 22 and 26. The top face of the bush 65 provides a thrust face for the bearing 26. The ejected oil flows down the inner walls of the body 50 through the restriction 53 where it drains away to an oil sump or tank (not shown).

The direction of rotation of the cartridge is preferably such that the oil drag produced on the body 50 tends to tighten the body on the co-operating screw threads 57 and 58. Thus in Figure 6 where threads 57 and 58 are right-hand threads the direction of rotation of the cartridge will be clockwise when viewed from below.

Because of the gradually deepening troughs 12 and 13 and the burr-free nozzles oil flow up to and through the nozzles 15 and 16 is less turbulent than heretofore.

The table below shows the results obtained of tests to measure cartridge rotational velocity and oil flow rates at various oil pressures. The cartridges were constructed to known principles and according to the principles of the present invention. Three types of cartridge were produced:

Cartridge A having a known base with separate brazed-in nozzle pieces and no tubular tension member;
Cartridge B having the same base as Cartridge A but including a tubular tension member; and
Cartridge C having a tubular tension member and a base member according to the present invention.

Table

| Engine oil pressure (bar) | Oil flow rate (l/min) | | | Rotational speed of cartridge (rev/min) | | | | | |
|---|---|---|---|---|---|---|---|---|---|
| | A | B | C | A | B | % inc. over A | C | % inc. over A | % inc. over B |
| 2 | 4.5 | 4.7 | 4.5 | 3250 | 3650 | 12.3 | 3800 | 16.9 | 4.1 |
| 3 | 5.55 | 5.75 | 5.5 | 4200 | 4700 | 11.9 | 5200 | 23.8 | 10.6 |
| 4 | 6.6 | 6.8 | 6.4 | 5050 | 5700 | 12.9 | 6400 | 26.7 | 12.3 |
| 5 | 7.5 | 7.9 | 7.45 | 5900 | 6700 | 13.5 | 7600 | 28.8 | 13.4 |
| 6 | 8.4 | 8.9 | 8.4 | 6700 | 7650 | 14.2 | 8750 | 30.6 | 14.4 |
| 7 | 9.1 | 9.7 | 9.25 | 7300 | 8350 | 14.4 | 9800 | 34.2 | 17.4 |

It may be seen from Table 1 by comparing the improvement of rotational speed of Cartridge B over Cartridge A that the tubular tension member gives a substantially constant improvement of about 12 to 14% over the whole range of oil pressures tested. Comparing now the improvement in rotational speed of Cartridge C over Cartridge B where the constructional difference is in the base and nozzles it may be seen that the improvement in rotational speed increases with increasing oil pressure. If one now observes the oil flow-rate through the nozzles of the cartridges at the various oil pressures it will be readily apparent that there is in fact little difference. The greatly improved performance of Cartridge C over both Cartrdiges A and B is, therefore, attributable to the reduction in turbulence of the issuing oil jets and possibly partly to the improved stiffness of the new base.

The higher rotational speeds of cartridges according to the present invention provide more effective contaminant removal from engine and transmission oil systems thus providing extended lives.

## Claims

1. A disposable cartridge for a centrifugal separator for cleaning fuel or lubricating oil; the cartridge comprising a cover member (20), and inner flow directing and debris-retaining member (30), a base member (10) in the form of a sheet metal pressing having two nozzles (16, 17) therein and through which oil leaves the cartridge so as to produce a reaction force to spin the cartridge, two bearings (22, 26), one each associated with the cover member and the base member, the at least two nozzles lying in recesses in the base member, the recesses being in the form of smoothly-contoured circumferential troughs (12, 13), being of deepening section starting with minimum depth at the beginning of the trough remote from the nozzle and finishing with maximum depth near to the nozzle, characterised in that the recesses extend through approximately 180°.

2. A disposable cartridge according to Claim 1 characterised in that the nozzles are pierced from the inside of the troughs.

3. A disposable cartridge according to Claim 1 and characterised in that the nozzles are formed by drilling from the inside.

4. A disposable cartridge according to any one preceding claim and characterised in that there is further provided a reinforcing tension member (40) of tubular form disposed between the top of the cover member and the base member.

5. A disposable cartridge according to Claim 4 and characterised in that the tubular reinforcing tension member also receives the bearings and maintains the bearings in alignment.

## Patentansprüche

1. Einweg-Filterpatrone für einen Zentrifugalabscheider zum Reinigen von Brennstoff oder Schmieröl mit einem Abdeckteil (20), einem Teil (30) zur inneren Strömungsleitung und zum Zurückhalten von Schlamm, einem Bodenelement (10) in Form eines Blechpreßteiles mit zwei darin vorgesehenen Ausströmöffnungen (16, 17), durch die Öl aus der Patrone derart austritt, daß eine Reaktionskraft zur Erzeugung einer Drehung der Patrone hervorgerufen wird, mit zwei Lagern (22, 26), von denen jeweils eines am Abdeckteil und am Bodenelement angebracht ist, wobei die wenigstens zwei Ausströmöffnungen in Vertiefungen im Bodenelement liegen, die in Form von kantenfrei geformten Umfangsrinnen (12, 13) ausgebildet sind, die einen Querschnitt mit zunehmender Tiefe aufweisen, der mit einer minimalen Teife am Anfang der Rinne von der Ausströmöffnung entfernt beginnt und mit maximaler Tiefe nahe der Ausströmöffnung endet, dadurch gekennzeichnet, daß die Vertiefungen über angenähert 180° verlaufen.

2. Einweg-Filterpatrone nach Anspruch 1, dadurch gekennzeichnet, daß die Ausströmöffnungen von der Innenseite der Rinnen aus durchgestoßen sind.

3. Einweg-Filterpatrone nach Anspruch 1, dadurch gekennzeichnet, daß die Ausströmöffnungen durch Bohren von der Innenseite her ausgebildet sind.

4. Einweg-Filterpatrone nach einem der vorangegangenen Ansprüche, dadurch gekennzeichnet, daß ferner ein Stütz-Zugglied (40) von rohrförmiger Ausbildung zwischen der Spitze des Abdeckteiles und dem Bodenelement vorgesehen ist.

5. Einweg-Filterpatrone nach Anspruch 4, dadurch gekennzeichnet, daß das rohrförmige Stütz-Zugglied auch die Lager aufnimmt und diese zueinander ausgerichtet hält.

## Revendications

1. Cartouche jetable pour un séparateur centrifuge apte à purifier des carburants ou huiles de lubrification; la cartouche comprenant un élément de couvercle (20), et un élément intérieur dirigeant la trajectoire du flux et retenant les déchets (30), un élément d'embase (10) ayant la forme d'une pièce de tôle emboutie à la presse comportant deux gicleurs (16, 17) dans celui-ci et à travers lesquels l'huile s'échappe de la cartouche de façon à produire une force de réaction pour faire tourner la cartouche, deux paliers (22, 26), chacun d'entre eux étant associé à l'élément de couvercle et à l'élément d'embase, les deux gicleurs au moins se situant dans des évidements dans l'élément d'embase, les évidements étant sous la forme d'auges circonférentielles à profilage de contour adouci (12, 13), étant d'une section de profondeur croissante, commençant par une profondeur minimale au début de l'auge en éloignement du gicleur et se terminant par une profondeur maximale à proximité du gicleur, caractérisée en ce que les évidements s'étendent sur environ 180°.

2. Cartouche jetable selon la revendication 1, caractérisée en ce que les gicleurs sont percés depuis l'interieur des auges.

3. Cartouche jetable selon la revendication 1, caractérisée en ce que les gicleurs sont formés par perçage depuis l'intérieur.

4. Cartouche jetable selon l'une quelconque des revendications précédentes, caractérisée en ce qu'il est de plus prévu un élément de tension de renforcement (40) de forme tubulaire situé entre le dessus de l'élément de couvercle et l'élément d'embase.

5. Cartouche jetable selon la revendication 4, caractérisée en ce que l'élément de tension de renforcement tubulaire reçoit également les paliers et maintient ces derniers en alignement.

FIG. Ia.

FIG. Ib.

*FIG. 2a.*

11    18

12

*FIG. 2b.*

11    18

12

*FIG. 2c.*

11    18

12

*FIG. 2d.*

11    12    18

*FIG. 2e.*

11    12    18

*FIG. 2f.*

11    12    18

FIG. 3b.

FIG. 3a.

FIG. 3c.

**FIG. 4.**

FIG. 5.

*Fig. 6.*